# EUROPÄISCHE PATENTSCHRIFT

(11) **EP 3 134 670 B1**
(45) Veröffentlichungstag und Bekanntmachung des Hinweises auf die Patenterteilung: **06.06.2018**
(21) Anmeldenummer: 15730041.9
(22) Anmeldetag: 23.04.2015
(51) Int. Cl.: F16L 13/14, B21D 39/04, F16L 37/088

(54) **STECKERBAUGRUPPE**
CONNECTOR ASSEMBLY
MODULE CONNECTEUR

(30) Priorität: 24.04.2014 AT 503012014
(43) Veröffentlichungstag der Anmeldung: 01.03.2017
(73) Patentinhaber: Henn GmbH & Co KG., 6850 Dornbirn (AT)
(72) Erfinder: HARTMANN, Harald, A-6850 Dornbirn (AT)
(74) Vertreter: Burger, Hannes
(86) Internationale Anmeldenummer: PCT/AT2015/050101
(87) Internationale Veröffentlichungsnummer: WO 2015/161333

(56) Entgegenhaltungen:
- AT-B1- 509 196
- DE-A1-102004 016 597

## Beschreibung

Die Erfindung betrifft eine Steckerbaugruppe, sowie ein mit dieser Steckerbaugruppe ausgestattetes Fahrzeug und ein Verfahren zur Herstellung einer Steckerbaugruppe, wie dies in den Ansprüchen 1, 12 und 13 angegeben ist.

Aus der AT 509 196 B1 ist ein Verfahren zum Verbinden eines Endabschnitts einer Leitung für flüssige oder gasförmige Medien mit einem Steckverbinder bekannt. Die Leitung für flüssige oder gasförmige Medien ist hierbei ein weichelastischer Kunststoffschlauch. Beim Verbindungsverfahren wird ein erster Wandabschnitt des Steckverbinders unter Verformung des zwischen dem ersten und einem zweiten Wandabschnitt des Steckverbinders liegenden Endabschnitts der Leitung mit einem Drückwerkzeug in Richtung zum zweiten Wandabschnitt verformt. Vor dem Verformen und/oder beim Verformen des ersten Wandabschnitts mit mindestens einer Abstandsmesseinrichtung wird durch eine im ersten oder zweiten Wandabschnitt angeordnete Fensteröffnung hindurch die der Fensteröffnung zugewandte Oberfläche der Leitung erfasst und wird die Verformung des ersten Wandabschnitts in Abhängigkeit vom Ergebnis der mit der Abstandsmesseinrichtung durchgeführten Erfassung der Oberfläche des Endabschnitts der Leitung durchgeführt.

Das in der AT 509 196 B1 beschriebene Verfahren zum Verbinden des Endabschnitts einer Leitung mit dem Steckverbinder bzw. die Ausgestaltung des Steckverbinders besitzt den Nachteil, dass nur weichelastische Endabschnitte durch ein derartiges Verfahren mit einem Steckverbinder verbunden werden können. Eine Verbindung mit einem starren Kunststoffrohr kann durch ein derartiges Verfahren beispielsweise nicht hergestellt werden.

Der vorliegenden Erfindung liegt die Aufgabe zugrunde eine Steckerbaugruppe zu schaffen, in welcher ein Steckverbinder mit einem Rohr vorteilhaft verbunden ist, sodass die Verbindungsstelle einerseits gut abgedichtet ist und andererseits mechanisch belastbar und einfach herzustellen ist, sowie ein Verfahren zur Herstellung einer derartigen Verbindung anzugeben.

Die Aufgabe der Erfindung wird durch die Maßnahmen gemäß Anspruch 1, und durch das Verfahren zur Herstellung einer Steckerbaugruppe gemäß Anspruch 13 gelöst.

Erfindungsgemäß ist eine Steckerbaugruppe umfassend ein Rohr, ein Dichtungselement und einen Steckverbinder ausgebildet. Der Steckverbinder umfasst einen Verbinderkörper, wobei der Verbinderkörper einen Ringraum aufweist, der zwischen einem hülsenförmigen, im Querschnitt eine zentrale Längsachse des Steckverbinders ringförmig umgebenden ersten Mantelabschnitt und einem hülsenförmigen, im Querschnitt die zentrale Längsachse ringförmig umgebenden zweiten Mantelabschnitt des Steckverbinders liegt. Der erste Mantelabschnitt ist vom zweiten Mantelabschnitt umgeben. Der erste Mantelabschnitt des Verbinderkörpers ist mit dem zweiten Mantelabschnitt an einem ersten Endabschnitt durch einen ersten Stirnwandabschnitt verbunden und die Mantelabschnitte sind an einem zweiten Endabschnitt offen zueinander, wodurch eine Rohraufnahmeseite des Verbinderkörpers ausgebildet ist. Ein Verbindungsabschnitt des Rohres ist von der Rohraufnahmeseite her in den Ringraum des Verbinderkörpers eingesetzt und mit diesem verbunden. Der Verbindungsabschnitt des Rohres weist eine am Umfang des Rohres eingebrachte Fixierausnehmung und baulich davon getrennt eine Dichtungsaufnahme auf. Im zusammengebauten Zustand der Steckerbaugruppe ist eine formschlüssige Verbindung zwischen ersten oder zweiten Mantelabschnitt des Verbinderkörpers und Fixierausnehmung des Rohres hergestellt. Der erste oder der zweite Mantelabschnitt ist im Bereich der Dichtungsaufnahme dermaßen verformt, sodass das Dichtungselement zwischen ersten oder zweiten Mantelabschnitt und Dichtungsaufnahme gepresst ist.

Von Vorteil an der erfindungsgemäßen Ausbildung ist, dass die Verpressung zum Herstellen einer Verbindung zwischen einem Rohr und einem Steckverbinder zwei örtlich getrennte Pressstellen aufweist. Eine Pressstelle im Bereich der Fixierausnehmung des Rohres hat die Aufgabe eine formschlüssige, mechanisch belastbare Verbindung zwischen Rohr und Steckverbinder herzustellen, sodass das Rohr in seiner Position relativ zum Steckverbinder positioniert ist. Diese Pressstelle kann hohe Belastungen aufnehmen, wobei an die Dichtwirkung der Pressstelle keine Anforderungen gestellt werden. Eine weitere Pressstelle, im Bereich der Dichtungsaufnahme ist im Zusammenwirken mit einem Dichtungselement dazu ausgebildet, um das Rohr gegenüber dem Steckverbinder abzudichten. Diese Pressstelle muss keine Kräfte aufnehmen, sondern hier ist vorgesehen, dass das Dichtungselement am Rohr und am Steckverbinder gut anliegt, um eine Dichtheit zwischen den beiden Teilen erreichen zu können. Somit kann durch die Erfindungsgemäße Ausgestaltung der Pressstelle eine Steckerbaugruppe geschaffen werden, welche im Vergleich zu anderen Lösungen kostengünstig und prozesssicher herzustellen ist.

Weiters kann es zweckmäßig sein, wenn sowohl die Fixierausnehmung als auch die Dichtungsaufnahme in eine Innenmantelfläche des Rohres eingebracht sind, wobei diese axial zueinander beabstandet sind. Von Vorteil ist hierbei, dass durch diese Maßnahme ein Verpresswerkzeug zum Herstellen der Verbindung von innen nach außen verpressen kann. Somit wird während des Verpressvorganges das Rohr und der Steckverbinder am Umfang betrachtet auf radialen Zug belastet. Eine derartige Belastung kann von den einzelnen Bauteilen gut abgefangen werden. Ein weiterer Vorteil besteht darin, dass durch diese Maßnahme die Verpressstelle nicht von außen sichtbar ist. Somit ist eine derartige Steckerbaugruppe für den Einsatz im Motorraum eines Kraftfahrzeuges geeignet, wo diese an einer für den Endkunden sichtbaren und zugänglichen Stelle verbaut ist.

Ferner kann vorgesehen sein, dass der erste Mantelabschnitt des Verbinderkörpers sich im zusammengebauten Zustand der Steckerbaugruppe in Axialrichtung gesehen zumindest über die Fixierausnehmung als auch über die Dichtungsaufnahme des Rohres erstreckt, sodass sowohl die Verpressung im Bereich der Fixierausnehmung als auch die Verpressung im Bereich des Dichtungselementes durch eine Verformung der ersten Mantelfläche realisiert sind. Von Vorteil ist hierbei, dass durch nur ein Verpresswerkzeug beide Verpressungen gleichzeitig hergestellt werden können. Ein weiterer Vorteil dieser Ausgestaltung liegt darin, dass der erste Mantelabschnitt in Form eines hohlzylindrischen Bauteilabschnittes ausgeführt sein kann, welcher in einem Tiefziehvorgang einfach und kostengünstig herzustellen ist.

Darüber hinaus kann vorgesehen sein, dass die Fixierausnehmung im Rohr als im Querschnitt halbrunde, in die Innenmantelfläche des Rohres eingebrachte Nut ausgebildet ist. Von Vorteil ist hierbei, dass eine derartige halbrunde Nut, im Herstellungsprozess des Rohres gut in dieses zu integrieren ist. Weiters kann die erste Mantelfläche mittels des Presswerkzeuges gut verformt werden, um mit der halbrunden Nut eine formschlüssige Verbindung herstellen zu können. Hierbei kann einerseits vorgesehen sein, dass Nut im Rohr umlaufend ausgebildet ist. Alternativ dazu kann vorgesehen sein, dass die Nut über den Umfang betrachtet segmentiert ist. Weiters kann auch die Umformung der ersten Mantelfläche umlaufend oder segmentiert sein, wobei auch eine segmentiere Umformung der ersten Mantelfläche mit einer umlaufenden Nut kombiniert werden kann. Eine segmentierte Umformung und eine segmentierte Nut weisen den Vorteil auf, dass derartige Segmentabschnitte durch ein Schieberwerkzeug, welches in radialer Richtung bewegt wird, einfach herzustellen ist.

Vorteilhaft ist auch eine Ausprägung, gemäß welcher die Dichtungsaufnahme des Rohres als an der Innenmantelfläche eingebrachter Stufenansatz ausgebildet sein kann, in welchem das Dichtungselement aufgenommen sein kann. Von Vorteil ist hierbei, dass ein derartiger Stufenansatz so ausgebildet sein kann, dass das in den Steckverbinder eingesetzte Dichtungselement während des Zusammenbaus de Steckerbaugruppe, insbesondere während des Einschiebens des Rohres in den Steckverbinder nicht beschädigt wird. Ein derartiger Stufenansatz kann im Herstellungsprozess des Rohres, insbesondere in einem Spritzgussprozess einfach und kostengünstig hergestellt werden, wobei auch keine Nachbearbeitung des Stufenansatzes notwendig ist. Von Vorteil ist weiters, dass ein derartiger Stufenansatz eine Anfasung aufweisen kann, um ein Einführen des Dichtungselementes in die Dichtungsaufnahme zu erleichtern.

Gemäß einer Weiterbildung ist es möglich, dass der Abstand der Dichtungsaufnahme zu einer Stirnwandung des Rohres geringer ist, als der Abstand der Fixierausnehmung zu der Stirnwandung. Von Vorteil ist hierbei, dass dadurch ein Einführen des Dichtungselementes in die Dichtungsaufnahme erleichtert wird.

Ferner kann es zweckmäßig sein, dass das Rohr in dessen Verbindungsabschnitt einen Ansatz aufweist, welcher mit einer Stirnwandung des ersten Mantelabschnittes korrespondiert, sodass die axiale Position des Rohres relativ zum Steckverbinder im zusammengebauten Zustand, insbesondere während des Zusammenbaues vorgebbar ist. Von Vorteil ist hierbei, dass somit eine Positionierung des Rohres relativ zum Steckverbinder während des Zusammenbaues der Steckerbaugruppe erleichtert wird. Somit kann der Prozess des Zusammenbaues der Steckerbaugruppe eine hohe Widerholgenauigkeit und somit eine hohe Prozesssicherheit aufweisen, wobei die Fehleranfälligkeit im Herstellungsprozess verringert wird. Durch diese Maßnahme wird weiters die Produktion von Ausschussware verringert, wodurch auch die Produktionskosten und damit einhergehend die Produktkosten verringert werden können.

Darüber hinaus kann vorgesehen sein, dass das Dichtungselement eine zylindrische Innenmantelfläche und eine zylindrische Außenmantelfläche aufweist, wobei im eingebauten Zustand des Dichtungselementes die zylindrische Innenmantelfläche am ersten Mantelabschnitt des Verbinderkörpers und die zylindrische Außenmantelfläche am zweiten Mantelabschnitt anliegt. Von Vorteil ist hierbei, dass im Zuge des Zusammenbaues der Steckerbaugruppe das Dichtungselement in den Steckverbinder, insbesondere in den Verbinderkörper eingesetzt werden kann und nicht in das Rohr eingesetzt werden muss. Dadurch wird der Zusammenbau der Steckerbaugruppe erleichtert, wodurch die Prozesssicherheit erhöht wird. Weiters ist bei einem derartigen Dichtungselement der korrekte Sitz des Dichtungselementes im Verbinderkörper gut zu kontrollieren. Die zylindrischen Mantelflächen liegen darüber hinaus gut an den jeweils korrespondierenden Flächen des Rohres bzw. des Verbinderkörpers an. Dadurch kann das Dichtungselement im eingebauten Zustand in der Steckerbaugruppe eine gute Abdichtwirkung gegenüber den damit korrespondierenden Bauteilen erzielen. Ein Vorteil der zylindrischen Flächen am Dichtungselement liegt darin, dass durch die zylindrischen Flächen im Zuge des Verpressvorganges ein axiales verrutschen des Dichtungselement weitestgehend vermieden wird. Durch die größere axiale Erstreckung des Dichtungselementes im Vergleich zu einem runden Dichtungsring, ist eine exakte axiale Position des Dichtungselementes während des Verpressvorganges nicht zwingend erforderlich. Dadurch wird die Prozesssicherheit erhöht, da Positionierfehler im Zusammenhang mit dem Dichtungselement weitestgehend vermieden werden können.

Weiters kann vorgesehen sein, dass das Rohr an seinem Verbindungsabschnitt an der Stirnwandung zumindest eine sich axial erstreckende Ausnehmung aufweist, welche mit einer Positionierlasche im Verbinderkörper korresponidert. Von Vorteil ist hierbei, dass durch eine derartige Ausnehmung auch eine um die Rotationsachse des Steckverbinders gesehen winkelig richtige Anordnung des Rohres relativ zum Steckverbinder erleichtert bzw. ermöglicht wird. Somit kann der Prozess des Zusammenbaues der Steckerbaugruppe eine hohe Widerholgenauigkeit und somit eine hohe Prozesssicherheit aufweisen, wobei die Fehleranfälligkeit im Herstellungsprozess verringert wird. Durch diese Maßnahme wird weiters die Produktion von Ausschussware verringert, wodurch auch die Produktionskosten und damit einhergehend die Produktkosten verringert werden können.

Ferner kann es zweckmäßig sein, dass der Verbinderkörper einteilig aus einem Tiefziehteil, insbesondere aus einem Edelstahlblech, geformt ist. Von Vorteil ist hierbei, dass ein derartiges Tiefziehteil besonders in Serienproduktion einfach und kostengünstig herzustellen ist.

Weiters kann ein derartiges Tiefziehteil mit einer hohen Widerhohlgenauigkeit hergestellt werden.

Darüber hinaus kann vorgesehen sein, dass das Rohr aus einem Kunststoff, etwa Polyamid, mittels eines Spritzgussverfahrens hergestellt ist. Ein derart hergestelltes Rohr weist den Vorteil auf, dass es besonders in einem Prozess zur Massenfertigung kostengünstig und mit einer hohen Widerhohlgenauigkeit hergestellt werden kann. Besonders die Maßnahmen nach Anspruch 1 ergeben zusammen mit einem derartig hergestellten Kunststoffrohr den Vorteil, dass eine im Rohr eingebrachte Dichtungsaufnahme durch eine einfache Entformung herstellbar ist. Somit müssen für die Bereitstellung einer Dichtungsaufnahme im Rohr keine "Einfallkerne" verwendet werden, welche zu einer Gratbildung führen würden, wodurch das Dichtelement beschädigt werden würde.

Gemäß einem Verfahren zum Verbinden eines Verbindungsabschnittes eines Rohres für flüssige oder gasförmige Medien mit einem Steckverbinder ist vorgesehen, dass der Verbindungsabschnitt des Rohres eine an einer Umfangfläche des Rohres eingebrachte Fixierausnehmung und baulich davon getrennt eine Dichtungsaufnahme aufweist. Der Steckverbinder umfasst einen Verbinderkörper, welcher Verbinderkörper einen Ringraum aufweist, der zwischen einem hülsenförmigen, im Querschnitt eine zentrale Längsachse des Steckverbinders ringförmig umgebenden ersten Mantelabschnitt und einem hülsenförmigen, im Querschnitt die zentrale Längsachse ringförmig umgebenden zweiten Mantelabschnitt des Steckverbinders liegt. Der erste Mantelabschnitt ist vom zweiten Mantelabschnitt umgeben. Der erste Mantelabschnitt des Verbinderkörpers ist mit dem zweiten Mantelabschnitt an einem ersten Endabschnitt durch einen ersten Stirnwandabschnitt verbunden. Die Mantelabschnitte sind an einem zweiten Endabschnitt offen zueinander, wodurch eine Rohraufnahmeseite des Verbinderkörpers ausgebildet ist. Insbesondere sind der Steckverbinder und das Rohr nach einem der vorhergehenden Ansprüche ausgebildet. In einem ersten Verfahrensschritt wird ein Dichtungselement in den Ringraum des Steckverbinders zwischen ersten und zweiten Mantelabschnitt, insbesondere an den ersten Mantelabschnitt anliegend eingebracht. In einem zweiten Verfahrensschritt wird der Verbindungsabschnitt des Rohres von der Rohraufnahmeseite des Verbinderkörpers her in den Ringraum des Steckverbinders eingeschoben und positioniert. In einem dritten Verfahrensschritt verformt ein Presswerkzeug den ersten Mantelabschnitt des Verbinderkörpers, wobei ein erster Teilbereich des Presswerkzeuges den ersten Mantelabschnitt so verformt, dass eine formschlüssige Verbindung zwischen des Rohr und Steckverbinder hergestellt wird, und ein zweiter Teilbereich des Presswerkzeuges einen axial distanzierten Bereich des ersten Mantelabschnittes so verformt, dass das Dichtungselement durch den ersten Mantelabschnitt komprimiert und somit zwischen ersten Mantelabschnitt und Rohr geklemmt wird.

Von Vorteil an dem erfindungsgemäßen Herstellverfahren ist, dass die Verpressung zum Herstellen einer Verbindung zwischen einem Rohr und einem Steckverbinder zwei örtlich getrennte Pressstellen aufweist. Eine Pressstelle im Bereich der Fixierausnehmung des Rohres hat die Aufgabe eine formschlüssige, mechanisch belastbare Verbindung zwischen Rohr und Steckverbinder herzustellen, sodass das Rohr in seiner Position relativ zum Steckverbinder positioniert ist. Diese Pressstelle kann hohe Belastungen aufnehmen, wobei an die Dichtwirkung der Pressstelle keine Anforderungen gestellt werden. Eine weitere Pressstelle, im Bereich der Dichtungsaufnahme ist im Zusammenwirken mit einem Dichtungselement dazu ausgebildet, um das Rohr gegenüber dem Steckverbinder abzudichten. Diese Pressstelle muss keine Kräfte aufnehmen, sondern hier ist vorgesehen, dass das Dichtungselement am Rohr und am Steckverbinder gut anliegt, um eine Dichtheit zwischen den beiden Teilen erreichen zu können. Somit kann durch die Erfindungsgemäße Ausgestaltung der Pressstelle eine Steckerbaugruppe geschaffen werden, welche im Vergleich zu anderen Lösungen kostengünstig und prozesssicher herzustellen ist.

Weiters kann vorgesehen sein, dass während des Umformverfahrens der Verfahrweg des Presswerkzeuges überwacht wird, wobei vor dem Verformen und/oder beim Verformen des ersten Mantelabschnitts mit mindestens einer Abstandsmesseinrichtung durch eine im ersten oder zweiten Wandabschnitt angeordnete Fensteröffnung hindurch die der Fensteröffnung zugewandte Oberfläche des Rohres erfasst wird und die Verformung des ersten Wandabschnitts in Abhängigkeit vom Ergebnis der mit der Abstandsmesseinrichtung durchgeführten Erfassung der Oberfläche des Endabschnitts des Rohres durchgeführt wird. Von Vorteil ist hierbei, dass durch dieses Verfahren kontrolliert werden kann, ob das Rohr richtig in der vorgesehenen Aufnahme des Verbinderkörpers positioniert ist. Dadurch kann die Proesssicherheit erhöht werden, da an die Genauigkeit des verwendeten Rohres geringere Anforderungen gestellt werden. Darüber hinaus kann durch dieses Verfahren erreicht werden, dass der Formschluss zwischen Rohr und Steckverbinder und auch die Dichtfläche zwischen Rohr und Steckverbinder eine ausreichend hohe Genauigkeit aufweisen, um einen guten Sitz der beiden Teile zueinander zu gewährleisten.

Gemäß einer besonderen Ausprägung ist es möglich, dass während des Umformverfahrens die vom Presswerkzeug auf den ersten Mantelabschnitt aufgebrachte Kraft gemessen und aktiv vorgegeben wird. Von Vorteil ist hierbei, dass dadurch die Stärke des Presssitz des Rohres am Steckverbinder, sowie die Dichtwirkung der beiden Teile zueinander beeinflusst und vorgegeben werden kann.

Schließlich kann vorgesehen sein, dass vor dem dritten Verfahrensschritt die richtige Positionierung des Dichtungselementes im Steckverbinder durch eine Messeinrichtung kontrolliert wird. Von Vorteil ist hierbei, dass noch vor dem Pressverfahren ermittelt werden kann, ob das Dichtungselement richtig positioniert ist. Somit kann erreicht werden, dass möglichst wenig Ausschuss produziert wird und somit die Prozesssicherheit erhöht werden kann.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Darstellung einer Steckerbaugruppe in einem Viertelschnitt;
- Fig. 2: ein mit der Steckerbaugruppe ausgestattetes Fahrzeug;
- Fig. 3: eine Schnittdarstellung der Steckerbaugruppe in einer Explosionsansicht;
- Fig. 4: eine Schnittdarstellung der Steckerbaugruppe nach Fig. 3 in einer zusammengebauten Stellung;
- Fig. 5: eine Schnittdarstellung der Steckerbaugruppe nach Fig. 3 und Fig. 4 in einer zusammengebauten und verpressten Stellung;
- Fig. 6: eine perspektivische Darstellung der Steckerbaugruppe;
- Fig. 7: eine perspektivische Darstellung der Steckerbaugruppe in einer Explosionsansicht;
- Fig. 8: eine Schnittdarstellung der Steckerbaugruppe mit Schnittführung durch ein Fenster im Außenmantel;
- Fig. 9: eine Schnittdarstellung der Steckerbaugruppe mit Verpresswerkzeug;
- Fig. 10: eine perspektivische Ansicht der Steckerbaugruppe mit Verpresswerkzeug.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

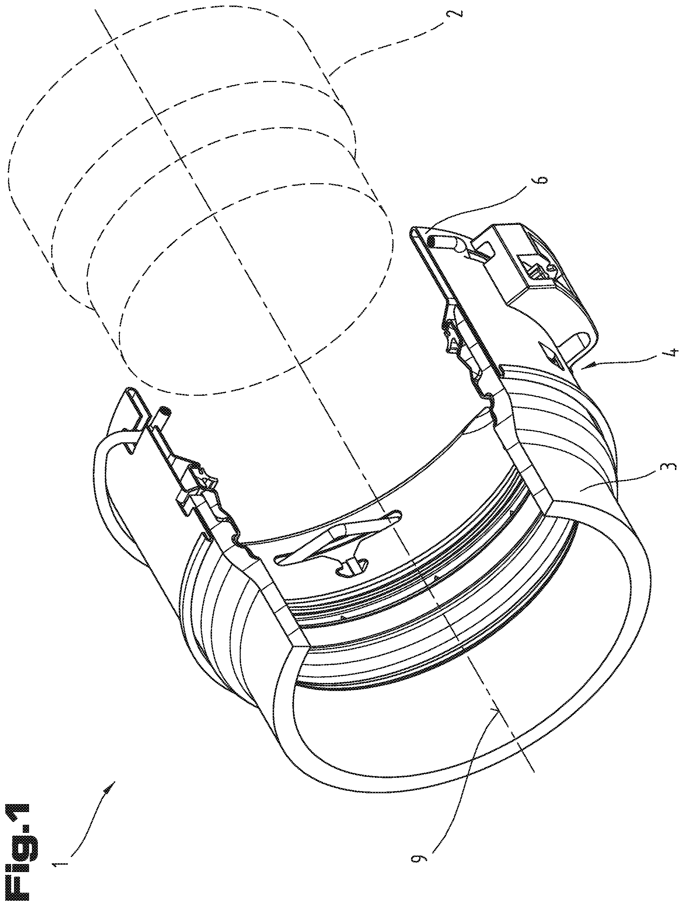

Fig. 1 zeigt eine perspektivische Ansicht einer Steckerbaugruppe 1, wobei diese in einem Viertelschnitt geschnitten dargestellt ist. Weiters ist in Fig. 1 schematisch ein Gegensteckverbinder 2 dargestellt, welcher mit der Steckerbaugruppe 1 verbindbar ist. Das Zusammenwirken zwischen Steckerbaugruppe 1 und einem Gegensteckverbinder 2 ist in der AT 509 196 B1 hinlänglich beschrieben.

In Fig. 1 ist die Steckerbaugruppe 1 in einem zusammengebauten Zustand dargestellt. Die Steckerbaugruppe 1 umfasst ein Rohr 3, einen Steckverbinder 4 sowie ein zwischen Steckverbinder 4 und Rohr 3 eingebrachtes Dichtungselement 5. Der Steckverbinder 4 umfasst einen Verbinderkörper 6, welcher vorzugsweise als einteiliges Umformteil, etwa als Tiefziehteil, insbesondere aus einem Edelstahlblech gebildet ist.

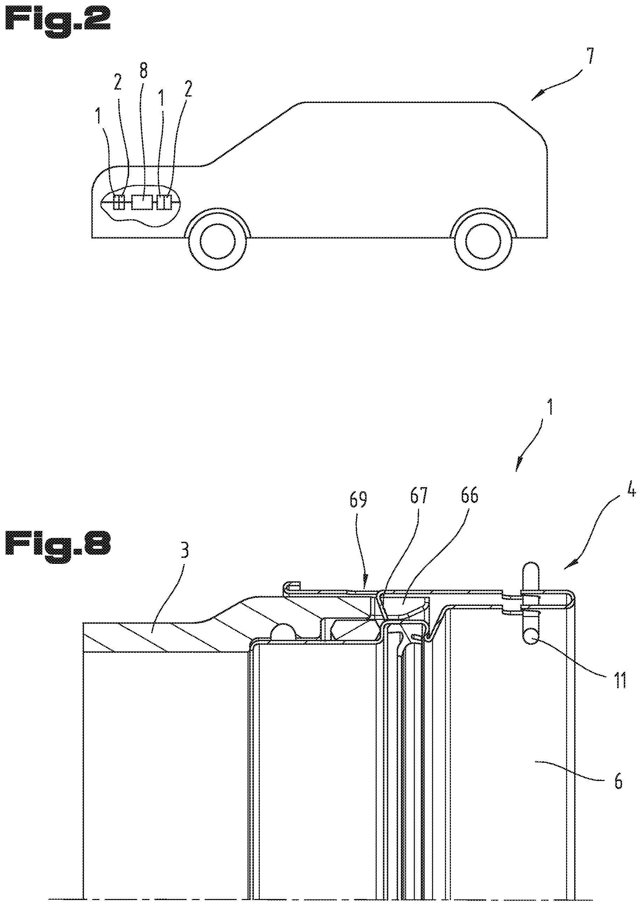

Fig. 2 zeigt eine schematische Darstellung eines Fahrzeuges 7 mit verbauter Steckerbaugruppe 1 entsprechend Fig. 1. Wie in Fig. 2 ersichtlich, wird die Steckerbaugruppe 1 vorzugsweise in einem Fahrzeug 7, insbesondere in einem straßengebundenen Kraftfahrzeug mit Verbrennungsmotor eingesetzt. Im Speziellen wird die Steckerbaugruppe 1 zum Verbinden verschiedener Bauteile der Frischluftzuführung zum Verbrennungsmotor eingesetzt. Beispielsweise kann vorgesehen sein, dass die Steckerbaugruppe 1 mit dem entsprechenden Gegensteckverbinder 2 zur Verbindung zweier Teile im Ansaugbereich eines Turboladers 8 vorgesehen ist. Weiters kann auch vorgesehen sein, dass eine derartige Steckerverbindung in der vom Turbolader 8 abgehenden Druckseite zur Verbindung zweier Bauteile eingesetzt wird.

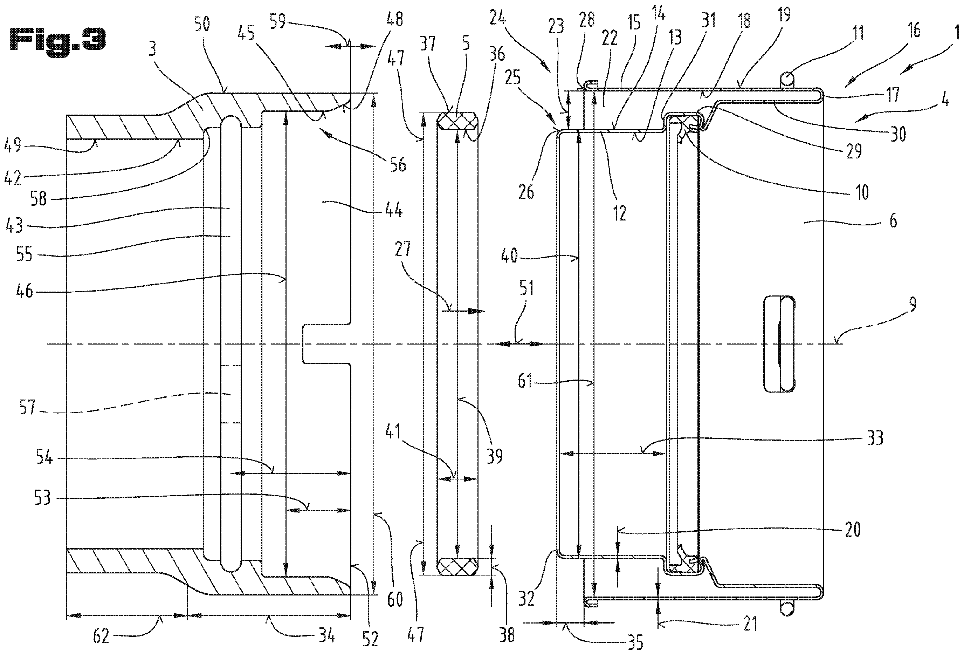

Fig. 3 zeigt einen Schnitt durch die Steckerbaugruppe 1 entlang einer zentralen Längsachse 9 des Steckverbinders 4. Um die einzelnen Bauteile gut beschreiben zu können, sind diese in der Fig. 3 in einer Explosionsansicht dargestellt.

Wie in Fig. 3 gut ersichtlich, umfasst der Steckverbinder 4 neben dem Verbinderkörper 6 eine Steckerdichtung 10, welche im Verbinderkörper 6 aufgenommen ist. Die Steckerdichtung 10 dient dazu, um die Steckerbaugruppe 1 im zusammengesteckten Zustand mit einem Gegensteckverbinder 2 ausreichend abdichten zu können.

Weiters umfasst der Steckverbinder 4 ein Federelement 11 durch welche die Steckerbaugruppe 1 in deren Position relativ zum, mit der Steckerbaugruppe 1 zusammengestesteckten, Gegensteckverbinder 2 gesichert werden kann. Das Federelement 11 ist dermaßen konstruiert, dass es leicht aktiviert und deaktiviert werden kann, sodass bedarfsweise die Steckerbaugruppe 1 und der Gegensteckverbinder 2 voneinander getrennt bzw. miteinander verbunden werden können.

Wie in Fig. 3 ersichtlich, ist am Verbinderkörper 6 ein erster Mantelabschnitt 12 ausgebildet, welcher die zentrale Längsachse 9 des Steckverbinders 4 hülsenförmig umgibt. Mit anderen Worten ausgedrückt, ist der erste Mantelabschnitt 12 ein rotationssymmetrischer Hohlzylinder.

Der erste Mantelabschnitt 12 weist eine innenliegende Mantelfläche 13 und eine außenliegende Mantelfläche 14 auf. Den ersten Mantelabschnitt 12 umgibt ein zweiter Mantelabschnitt 15, welcher ebenfalls bezüglich der zentralen Längsachse 9 rotationssymmetrisch ausgebildet ist. Der erste Mantelabschnitt 12 ist mit dem zweiten Mantelabschnitt 15 an einem ersten Endabschnitt 16 mittels eines ersten Stirnwandabschnittes 17 verbunden.

Gleich wie der erste Mantelabschnitt 12 weist auch der zweite Mantelabschnitt 15 eine innenliegende Mantelfläche 18 und eine außenliegende Mantelfläche 19 auf.

Der erste Mantelabschnitt 12 wird durch seine innenliegende Mantelfläche 13 und die außenliegende Mantelfläche 14 begrenzt, wodurch sich eine Wandstärke 20 des ersten Mantelabschnittes 12 ergibt. Der zweite Mantelabschnitt 15 wird ebenfalls durch eine innenliegende Mantelfläche 18 und eine außenliegende Mantelfläche 19 begrenzt, wodurch sich eine Wandstärke 21 des zweiten Mantelabschnittes 15 ergibt.

Durch die Beabstandung der beiden Mantelabschnitte 12, 15 zueinander, ergibt sich ein Ringraum 22. Der Ringraum 22 wird insbesondere in radialer Richtung durch die außenliegende Mantelfläche 14 des ersten Mantelabschnittes 12 und durch die innenliegende Mantelfläche 18 des zweiten Mantelabschnittes 15 begrenzt. Insbesondere ergibt sich dadurch ein Ringraumspalt 23. Dieser Ringraumspalt 23 ist vorzugsweise so groß gewählt, dass das Rohr 3 zumindest teilweise darin aufgenommen werden kann. Im dargestellten Ausführungsbeispiel ist der Ringraumspalt 23 zwischen 2mm und 20mm, insbesondere, zwischen 3mm und 10mm, bevorzugt zwischen 5mm und 7mm groß.

Die beiden Mantelabschnitte 12, 15 sind an einem zweiten Endabschnitt 24 des Steckverbinders 4 offen zueinander, wodurch sich eine Rohraufnahmeseite 25 des Verbinderkörpers 6 ergibt.

Es kann vorgesehen sein, dass der erste Mantelabschnitt 12 eine Abschrägung 26 aufweist, welche an der Rohraufnahmeseite 25 des ersten Mantelabschnittes 12 ausgebildet ist. Eine derartige Abschrägung 26 bringt den Vorteil mit sich, dass ein Dichtungselement 5 leicht in Einschieberichtung 27 auf den ersten Mantelabschnitt 12 aufgeschoben werden kann. Darüber hinaus kann auch vorgesehen sein, dass der zweite Mantelabschnitt 15 eine derartige Abschrägung 28 aufweist, sodass auch das Rohr 3 leicht in den Ringraum 22 eingeschoben werden kann.

Die Abschrägungen 26, 28 können beispielsweise durch Umbördelungen mit entsprechenden Radien realisiert werden und werden vorzugsweise während des Tiefziehvorganges ausgeformt.

Weiters kann vorgesehen sein, dass an den ersten Mantelabschnitt 12 in Richtung ersten Endabschnitt 16 des Steckverbinders 4 betrachtet, eine Dichtungsaufnahme 29 anschließt, welche ebenfalls im Verbinderkörper 6 ausgeformt ist. In einer derartigen Dichtungsaufnahme 29 kann eine Steckerdichtung 10 aufgenommen sein. Weiters kann vorgesehen sein, dass an die Dichtungsaufnahme 29 ein dritter Mantelabschnitt 30 anschließt, welcher zur Aufnahme des Gegensteckverbinders 2 dient. An den dritten Mantelabschnitt 30 kann der Stirnwandabschnitt 17 anschließen, welcher den dritten Mantelabschnitt 30 mit dem zweiten Mantelabschnitt 15 verbindet. Durch diesen Aufbau bzw. Zusammenhang ist, wie bereits erwähnt, der erste Mantelabschnitt 12 über den Stirnwandabschnitt 17 mit dem zweiten Mantelabschnitt 15 verbunden.

Bevorzugt wird der Verbinderkörper 6 in einem Tiefziehverfahren hergestellt, wobei sämtliche Wandstärken der Mantelabschnitte des Verbinderkörpers 6 in etwa gleich groß sind.

Wie in der Ansicht in Fig. 3 ersichtlich, kann es auch zweckmäßig sein, dass die Dichtungsaufnahme 29 eine Stirnwandung 31 aufweist, welche an den ersten Mantelabschnitt 12 anschließt. Die Stirnwandung 31 kann hier insbesondere in Richtung zum zweiten Mantelabschnitt 15 gebogen sein, wodurch sich eine Aufnahmemulde für die Steckerdichtung 10 ergibt.

Die Ausbildung der Stirnwandung 31 bringt weiters den Vorteil mit sich, dass im Zuge des Zusammenbaus der Steckerbaugruppe 1 das Dichtungselement 5 soweit in Einschieberichtung 27 in den Ringraum 22 eingeschoben werden kann, bis es an der Stirnwandung 31 anliegt. Somit kann die Stirnwandung 31 auch dazu dienen, um den Positioniervorgang des Dichtungselementes 5 zu erleichtern. Mit anderen Worten ausgedrückt, dient die Stirnwand 31 als axialer Positionieranschlag für das Dichtungselement 5.

Auch der erste Mantelabschnitt 12 weist an dessen Rohraufnahmeseite 25 eine Stirnwandung 32 auf, welche als Positionieranschlag für das Rohr 3 dienen kann.

Eine axiale Erstreckung 33 des ersten Mantelabschnittes 12 wird vorzugsweise so groß gewählt, dass der Ringraum 22 eine ausreichende Länge aufweist, um das Dichtungselement 5 und einen am Rohr 3 ausgebildeten Verbindungsabschnitt 34 aufzunehmen.

Weiters kann vorgesehen sein, dass sich der erste Mantelabschnitt 12 weiter in Richtung Rohraufnahmeseite 25 erstreckt als der zweite Mantelabschnitt 15 und somit in einem gewissen Abstand 35 gegenüber dem zweiten Mantelabschnitt 15 in axialer Richtung gesehen vorsteht.

Auch das Dichtungselement 5 ist im Wesentlichen ein rotationssymmetrischer Körper, wobei ein im Wesentlichen rechteckiger Querschnitt um die zentrale Längsachse 9 rotationssymmetrisch ausgebildet ist. Dadurch ergibt sich am Dichtungselement 5 eine Innenmantelfläche 36 und eine Außenmantelfläche 37, welche in einem gewissen Abstand zueinander angeordnet sind, wodurch sich eine Wandstärke 38 des Dichtungselementes 5 ergibt. Die Wandstärke 38 des Dichtungselementes 5 wird vorzugsweise so groß gewählt, dass das Dichtungselement 5, welches vorzugsweise aus einem weichelastischen Material gebildet ist, leicht verformt werden kann. Bevorzugt wird eine Wandstärke 38 zwischen 1mm und 10mm, insbesondere zwischen 2mm und 5mm gewählt, um ein Dichtungselement 5 zu erhalten, welches seine Funktion bestmöglich erfüllen kann.

Ein Innendurchmesser 39 des Dichtungselementes 5 ist in etwa so groß gewählt, wie ein Außendurchmesser 40 des ersten Mantelabschnittes 12. Von Vorteil ist es, wenn die beiden Durchmesser 39, 40 so aufeinander abgestimmt sind, dass das Dichtungselement 5 leicht auf den ersten Mantelabschnitt 12 aufgeschoben werden kann und dort guten Halt findet. Im dargestellten Ausführungsbeispiel beträgt der Innendurchmesser 39 des Dichtungselementes 5 in etwa 62mm.

Eine Breite 41 des Dichtungselementes 5 kann vorzugsweise so gewählt werden, dass diese etwa zwischen 200 % und 400 % der Dicke 38 des Dichtungselementes 5 beträgt. Durch diese Ausgestaltung des Dichtungselementes 5 kann erreicht werden, dass dieses im verbauten Zustand in der Steckerbaugruppe 1 seine Wirkung bestmöglich entfalten kann.

Der Verbindungsabschnitt 34 des Rohres 3 weist eine an eine Umfangfläche 42 eingebrachte Fixierausnehmung 43 auf. Die Fixierausnehmung 43 ist vorzugsweise in eine innenliegende Umfangfläche 42 des Rohres 3 eingebracht. In einer weiteren Ausführungsvariante, welche nicht weiter dargestellt ist, ist es auch denkbar, dass die Fixierausnehmung 43 in eine außenliegende Umfangfläche 42 des Rohres 3 eingebracht ist.

Weiters weist das Rohr 3 eine Dichtungsaufnahme 44 auf, welche im zusammengebauten Zustand der Steckerbaugruppe 1 mit dem Dichtungselement 5 zusammenwirkt. Insbesondere kann vorgesehen sein, dass im zusammengebauten Zustand der Steckerbaugruppe 1 die Außenmantelfläche 37 des Dichtungselementes 5 an einer Innenmantelfläche 45 der Dichtungsaufnahme 44 anliegt. Hierzu ist es vorteilhaft, wenn ein Innendurchmesser 46 der Dichtungsaufnahme 44 in etwa gleich groß gewählt wird, wie ein Außendurchmesser 47 des Dichtungselementes 5. Vorzugsweise werden die beiden Durchmesser 46, 47 so gewählt, dass das Rohr 3 während des Zusammenbauvorganges der Steckerbaugruppe 1 leicht über das Dichtungselement 5 geschoben werden kann.

Um den Zusammenbauvorgang zu erleichtern, kann vorgesehen sein, dass die Dichtungsaufnahme 44 eine Abschrägung 48 aufweist.

In einer bevorzugten Ausführungsvariante, wie sie in Fig. 3 dargestellt ist, kann vorgesehen sein, dass sowohl die Fixierausnehmung 43 als auch die Dichtungsaufnahme 44 in eine Innenmantelfläche 49 des Rohres 3 eingebracht sind.

Weiters ist es auch denkbar, dass die Fixierausnehmung 43 und/oder die Dichtungsaufnahme 44 in eine Außenmantelfläche 50 des Rohres angebracht sind.

Die Fixierausnehmung 43 und die Dichtungsaufnahme 44 sind vorzugsweise axial zueinander beabstandet im Rohr 3 angeordnet. Das Rohr 3 weist eine Stirnwandung 52 auf, welche im zusammengebauten Zustand im Verbinderkörper 6, insbesondere im Ringraum 22 aufgenommen ist.

Ein Abstand 53 der Dichtungsaufnahme 44 zur Stirnwandung 52 kann entsprechend dem dargestellten Ausführungsbeispiel geringer sein, als ein Abstand 54 der Fixierausnehmung 43 zur Stirnwandung 52.

In einer bevorzugten Ausführungsvariante kann vorgesehen sein, dass die Dichtungsaufnahme 44 als ein in der Innenmantelfläche 49 des Rohres 3 eingebrachter Stufenansatz 56 ausgebildet ist. Eine Ausbildung der Dichtungsaufnahme 44 als Stufenansatz 56 dient dazu, um während des Zusammenbaus der Steckerbaugruppe 1 das Dichtungselement 5 bezüglich seiner axialen Position sichern zu können.

Die Fixierausnehmung 43 ist vorzugsweise als eine im Querschnitt halbrunde Nut 55 ausgebildet, welche in die Innenmantelfläche 49 des Rohres 3 eingebracht ist. Gemäß einer ersten Ausführungsvariante kann vorgesehen sein, dass die Nut 55 als umlaufende Nut ausgebildet ist.

Gemäß einer weiteren Ausführungsvariante kann vorgesehen sein, dass die Nut 55 über den Umfang betrachtet segmentiert ist und somit Zwischenstege 57 aufweist, welche die Nut 55 unterbrechen. Eine derartige Ausführungsvariante kann sich insbesondere herstellungsbedingt ergeben.

Weiters kann vorgesehen sein, dass das Rohr 3 an dessen Innenmantelfläche 49 einen Ansatz 58 aufweist, welcher im zusammengebauten Zustand mit der Stirnwandung 32 des ersten Mantelabschnittes 12 korrespondierend, sodass die axiale Position 59 des Rohres 3 relativ zum Steckverbinder 4 vorgebbar ist.

Ein Außendurchmesser 60 des Rohres 3 wird vorzugsweise so gewählt, dass er kleiner ist als ein Innendurchmesser 61 des zweiten Mantelabschnittes 15 des Verbinderkörpers 6. Dadurch kann das Rohr 3 während des Zusammenbaus der Steckerbaugruppe 1 leicht in den Ringraum 22 des Verbinderkörpers 6 eingeschoben werden.

Weiters kann vorgesehen sein, dass das Rohr 3 im Bereich seines Verbindungsabschnittes 34 eine größere Wandstärke aufweist als in einem zylindrischen Rohrabschnitt 62.

Ein Zusammenbau der Steckerbaugruppe 1 wird im Folgenden anhand der Darstellung in Fig. 3 beschrieben.

In einem ersten Verfahrensschritt wird das Dichtungselement 5 in den Ringraum 22 eingesetzt. Hierbei kann das Dichtungselement 5 im Ringraum 22 soweit in Einschieberichtung 27 verschoben werden, bis es an der Stirnwandung 31 der Dichtungsaufnahme 29 anliegt. In einem weiteren Verfahrensschritt kann nun die richtige Lage des Dichtungselementes 5 im Verbinderkörper 6 kontrolliert werden. Nähere Erklärungen zu diesem Verfahrensschritt werden in weiterer Folge der Figurenbeschreibung gegeben. Ist das Dichtungselement 5 richtig im Verbinderkörper 6 positioniert, so kann nun in einem weiteren Verfahrensschritt das Rohr 3 in Einschieberichtung 27 in den Ringraum 22 eingeschoben werden. Vorzugsweise wird das Rohr 3 soweit in den Ringraum 22 eingeschoben, bis der Ansatz 58 des Rohres 3 an der Stirnwandung 32 des ersten Mantelabschnittes 12 des Verbinderkörpers 6 anliegt. Dadurch ist auch die axiale Position 59 des Rohres 3 relativ zum Verbinderkörper 6 festgelegt.

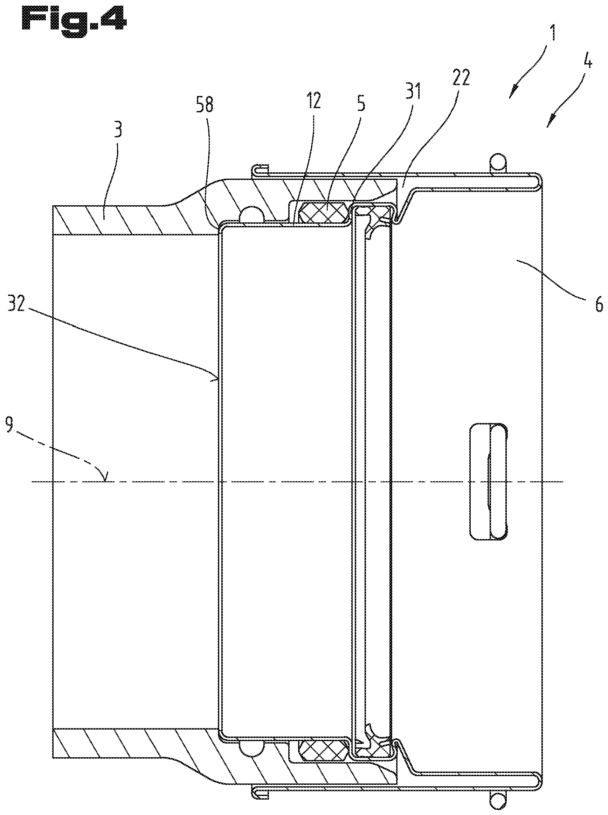

Fig. 4 zeigt eine Schnittdarstellung entsprechend Fig. 3. Jedoch sind in dieser Ansicht sowohl das Dichtungselement 5, als auch das Rohr 3 in einer zusammengesteckten Position dargestellt, in welcher sie in den Ringraum 22 des Verbinderkörpers 6 geschoben sind. In der Fig. 4 werden für gleiche Teile gleiche Bezugszeichen bzw. Bauteilbezeichnungen wie in der vorangegangenen Fig. 3 verwendet. Um unnötige Wiederholungen zu vermeiden, wird auf die detaillierte Beschreibung der vorangegangenen Fig. 3 hingewiesen bzw. Bezug genommen.

Wie in Fig. 4 ersichtlich, liegt im zusammengebauten Zustand der Steckerbaugruppe 1 das Dichtungselement 5 an der Stirnwandung 31 der Dichtungsaufnahme 29 an.

Das Rohr 3 ist dadurch bezüglich dessen axialer Verschiebbarkeit positioniert, dass der Ansatz 58 des Rohres 3 an der Stirnwandung 32 des ersten Mantelabschnittes 12 anliegt.

Um die einzelnen Bauteile zueinander zu fixieren, kann vorgesehen sein, dass in einem weiteren Verfahrensschritt zur Herstellung der Steckerbaugruppe 1 die erste Mantelfläche 12 verpresst wird, sodass eine formschlüssige Verbindung zwischen erster Mantelfläche 12 und Rohr 3 hergestellt wird. Das Verpressverfahren an sich wird in weiterer Folge in der Figurenbeschreibung noch genauer erläutert.

In einer weiteren, nicht dargestellten, Ausführungsvariante, in welcher die Fixierausnehmung 43 und/oder die Dichtungsaufnahme 44 in eine außenliegende Umfangfläche 42 des Rohres 3 eingebracht sind kann auch vorgesehen sein, dass der zweite Mantelabschnitt 35 verpresst wird um eine entsprechende Verbindung herstellen zu können.

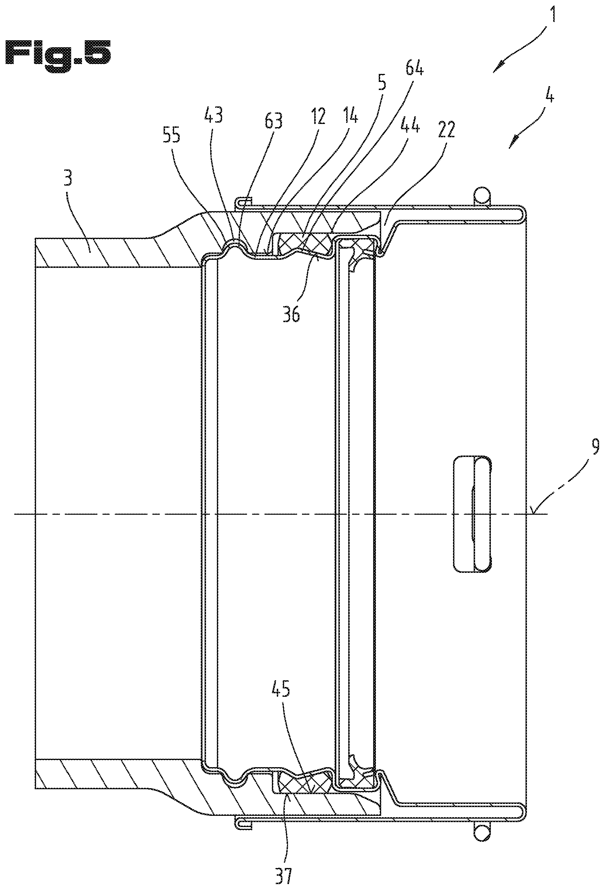

Fig. 5 zeigt eine weitere Schnittdarstellung der Steckerbaugruppe 1 entsprechend der Darstellungen in den Figuren 3 und 4. In der Fig. 5 werden für gleiche Teile gleiche Bezugszeichen bzw. Bauteilbezeichnungen wie in der vorangegangenen Figuren 3 und 4 verwendet. Um unnötige Wiederholungen zu vermeiden, wird auf die detaillierte Beschreibung der vorangegangenen Fig. 3 hingewiesen bzw. Bezug genommen.

In der Schnittdarstellung in Fig. 5 ist die Steckerbaugruppe 1 in einem verpressten Zustand dargestellt. Wie in Fig. 5 ersichtlich, ist der erste Mantelabschnitt 12 an einer ersten Umformstelle 63 so verformt, dass eine formschlüssige Verbindung zwischen ersten Mantelabschnitt 12 und Fixierausnehmung 43 hergestellt ist. Insbesondere liegt hierbei der erste Mantelabschnitt 12, im Speziellen die außenliegende Mantelfläche 14 des ersten Mantelabschnittes 12, dicht an dicht an der Nut 55 an. Durch diese erste Umformstelle 63 kann das Rohr 3 in seiner axialen Position relativ zum Verbinderkörper 6 gesichert werden.

Örtlich getrennt von dieser ersten Umformstelle 63 ist eine zweite Umformstelle 64 ausgebildet, in welcher der erste Mantelabschnitt 12 des Verbinderkörpers 6 dermaßen verformt ist, dass das Dichtungselement 5 zwischen ersten Mantelabschnitt 12 und der Dichtungsaufnahme 44 des Rohres 3 geklemmt ist. Durch diese Klemmung ergibt sich auch eine Verformung des Dichtungselementes 5, welches vorzugsweise aus einem weichelastischen Material, wie etwa Gummi, ausgebildet ist.

Insbesondere ist die Innenmantelfläche 36 des Dichtungselementes 5 an die außenliegende Mantelfläche 14 des ersten Mantelabschnittes 12 gepresst, sodass diese dicht an dicht aneinander anliegen. Weiters ist die Außenmantelfläche 37 des Dichtungselementes 5 an die Innenmantelfläche 45 der Dichtungsaufnahme 44 im Rohr 3 gepresst, sodass auch diese Flächen dicht an dicht aneinander anliegen. Durch diese zweite Umformstelle 64 und die damit einhergehende Verpressung des Dichtungselementes 5 wird erreicht, dass das Rohr 3 gegenüber dem Steckverbinder 4 ausreichend abgedichtet werden kann, um ein Ausströmen eines unter Druck stehenden Gases zu verhindern.

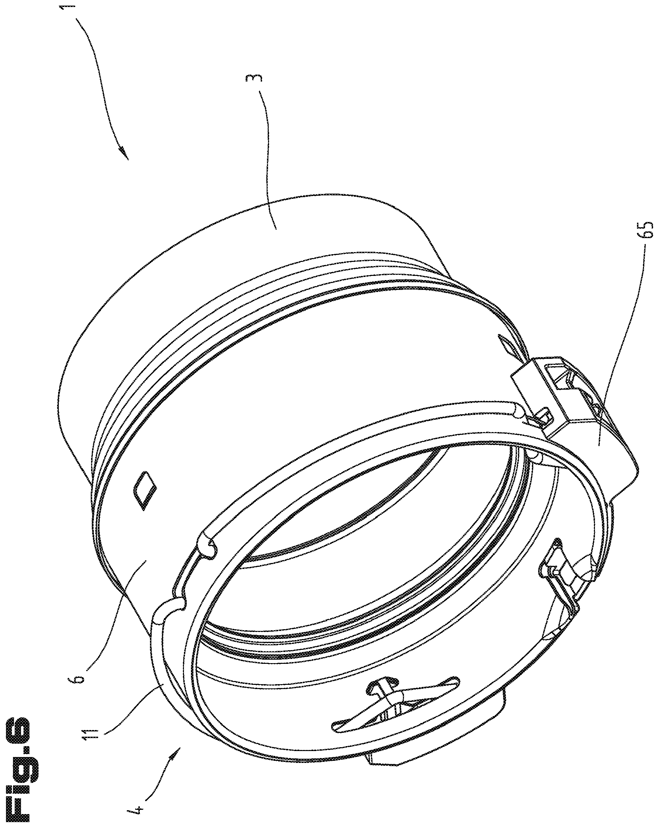

Fig. 6 zeigt eine perspektivische Ansicht der Steckerbaugruppe 1 nach den Figuren 1 bis 5, wobei diese in einem zusammengebauten Zustand dargestellt ist. In Fig. 6 ist ersichtlich, dass der Steckverbinder 4 neben dem Verbinderkörper 6 und dem Federelement 11 auch noch weitere Bauelemente 65 umfassen kann, welche insbesondere mit dem Federelement 11 zusammenwirken und mit diesem zusammen einen Schließmechanismus ausbilden.

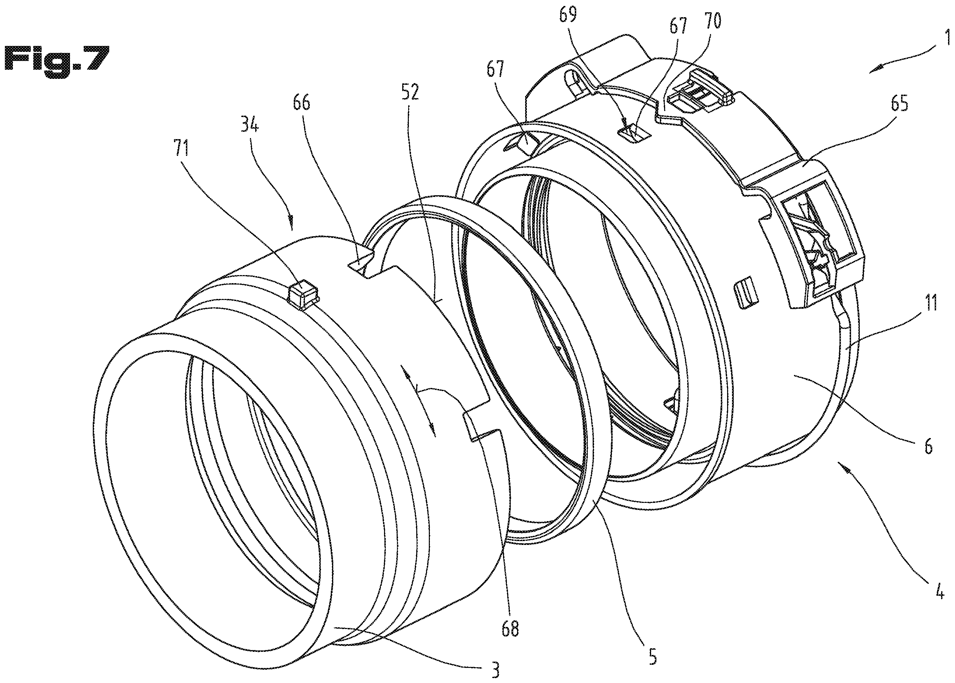

Fig. 7 zeigt eine weitere perspektivische Darstellung der Steckerbaugruppe 1 nach den Figuren 1 bis 5, wobei diese in einer Explosionsansicht dargestellt ist, sodass die einzelnen Bauelemente sichtbar sind.

Insbesondere ist in der Darstellungsvariante in Fig. 7 ersichtlich, dass vorgesehen sein kann, dass das Rohr 3 eine Ausnehmung 66 aufweist, welche mit einer Positionierlasche 67 im Verbinderkörper 6 zusammenwirkt. Die Ausnehmung 66 ist vorzugsweise eine sich axial erstreckende Ausnehmung, welche ausgehend von der Stirnwandung 52 des Rohres 3 in den Verbindungsabschnitt 34 eingebracht ist. Eine derartige Kombination aus Ausnehmung 66 und Positionierlasche 67 kann dazu dienen, um das Rohr 3 in seiner Winkellage 68 gegenüber dem Steckverbinder 4 richtig positionieren zu können.

Die Positionierlasche 67 im Verbinderkörper 6 kann dadurch gebildet werden, dass während des Tiefziehvorganges zur Herstellung des Verbinderkörpers 6 in einem Querbearbeitungsschritt aus dem zweiten Mantelabschnitt 15 nach innen gestanzt wird. Durch diesen Vorgang entsteht auch eine Fensteröffnung 69, durch welche mittels eines optischen Messmittels die richtige Lage des Dichtungselementes 5 während des Einbaus kontrolliert werden kann.

Entsprechend der Darstellung in Fig. 7 kann auch vorgesehen sein, dass nicht nur eine Positionierlasche 67 ausgebildet ist, sondern dass gleich mehrere Positionierlaschen 67 ausgebildet sind.

Weiters kann vorgesehen sein, dass das weitere Bauelement 65 einen Anzeigepfeil 70 aufweist, durch welchen die richtige Lage des Steckverbinders 4 relativ zum damit zu verbindenden Gegensteckverbinder 2 angezeigt werden kann. Insbesondere kann es zweckmäßig sein, dass eine Anzeigenase 71 des Rohres 3 in Zusammenschau mit dem Anzeigepfeil 70 die richtige Lage des Rohres 3 relativ zum Steckverbinder 4 anzeigt.

Fig. 8 zeigt eine weitere Schnittdarstellung der Steckerbaugruppe 1 in einem zusammengebauten und unverpressten Zustand, wobei hier die Schnittführung so gelegt ist, dass der Schnitt exakt durch eine Fensteröffnung 69 verläuft. Somit ist gut ersichtlich, wie die Positionierlasche 67 des Verbinderkörpers 6 mit der Ausnehmung 66 des Rohres 3 zusammenwirkt. Auch hier wird der Kürze halber auf die vorangegangenen Figuren 1 bis 7 Bezug genommen.

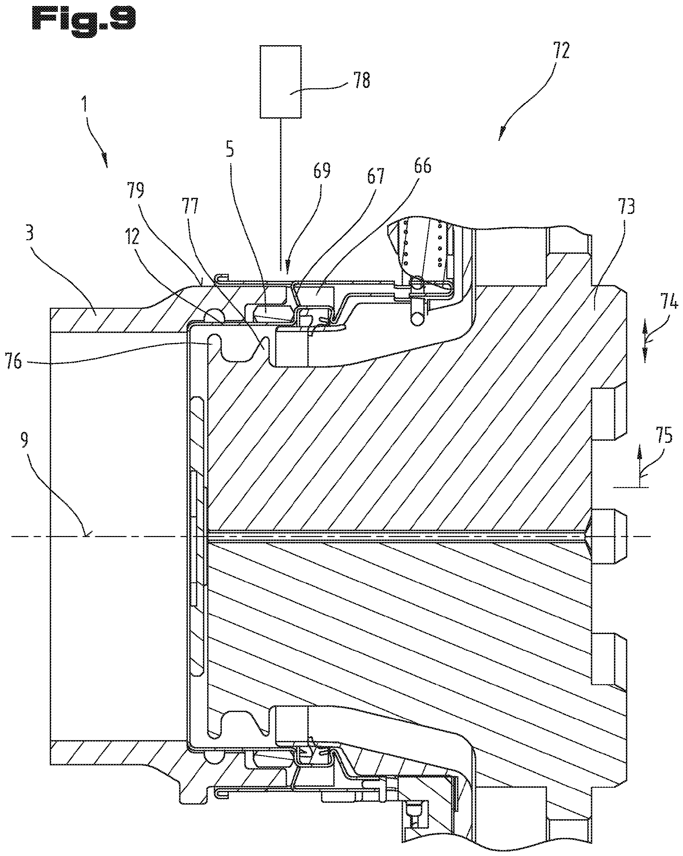

Fig. 9 zeigt eine Schnittdarstellung durch eine Pressmaschine 72 mit aufgespannter Steckerbaugruppe 1 entsprechend der Figuren 1 bis 8, wobei auch hier die Schnittführung entlang der zentralen Längsachse 9 gewählt ist.

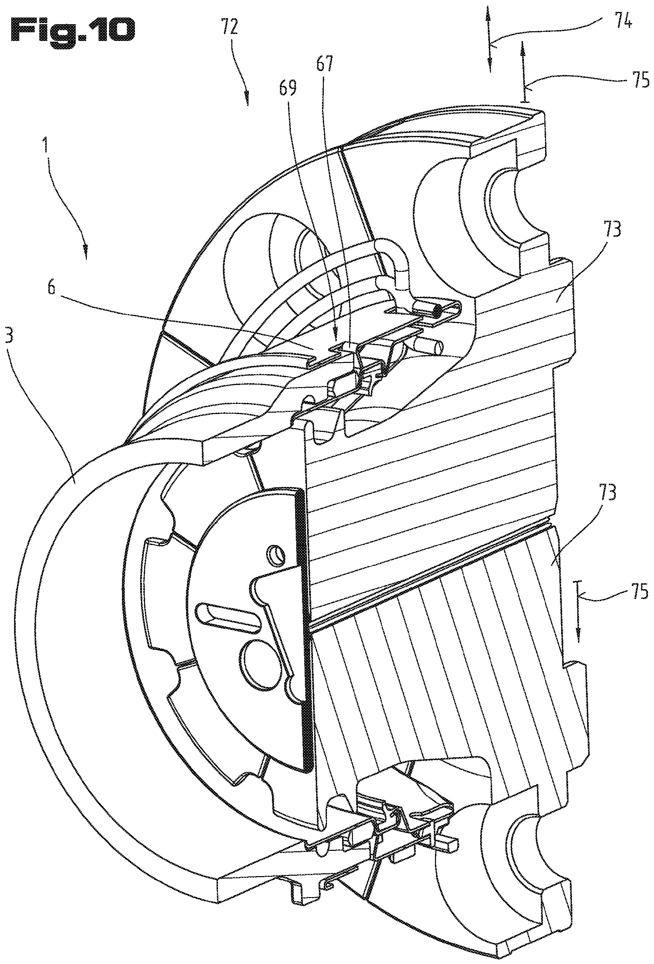

Fig. 10 zeigt eine perspektivische Ansicht der Schnittdarstellung entsprechend Fig. 9.

Wie in einer Zusammenschau aus Fig. 9 und Fig. 10 ersichtlich, umfasst die Pressmaschine 72 ein Presswerkzeug 73, mittels dem der erste Mantelabschnitt 12 des Verbinderkörpers 6 verformt werden kann und somit die Pressverbindung der Steckerbaugruppe 1 hergestellt werden kann. Das Presswerkzeug 73 verfährt während dem Verpressvorgang in Radialrichtung 74. Um eine dichte Verbindung zwischen Steckverbinder 4 und Gegensteckverbinder 2 herstellen zu können, ist ein gewisser Verfahrweg 75 notwendig, welchen das Presswerkzeug 73 verfahren muss.

Das Presswerkzeug 73 ist dermaßen ausgebildet, dass es zwei Teilbereiche aufweist. Ein erster Teilbereich 76 verformt den ersten Mantelabschnitt 12 so dass eine erste Umformstelle 63 ausgebildet wird. Die erste Umformstelle 63 stellt hierbei eine formschlüssige Verbindung zwischen Rohr 3 und Verbinderkörper 6 her. Ein zweiter Teilbereich 77 des Presswerkzeuges 73 erzeugt eine zweite Umformstelle 64 durch welche das Dichtungselement 5 geklemmt wird.

Weiters kann eine Abstandsmesseinrichtung 78 vorgesehen sein, welche durch eine im zweiten Mantelabschnitt 15 angeordnete Fensteröffnung 69 hindurch die der Fensteröffnung 69 zugewandte Außenoberfläche 79 des Rohres 3 erfasst. Dadurch kann die Verformung des ersten Mantelabschnitts 12 in Abhängigkeit vom Ergebnis der mit der Abstandsmesseinrichtung 78 durchgeführten Erfassung der Oberfläche 79 des Rohres 3 durchgeführt werden.

Weiters kann vorgesehen sein, dass die Abstandsmesseinrichtung 78 vor dem einstecken des Rohres 3 in den Ringraum 22 eine richtige Lage des Dichtungselementes 5 am ersten Mantelabschnitt 12 erfasst.

Weiters kann vorgesehen sein, dass durch die Abstandsmesseinrichtung 78 der Außendurchmesser 40 des ersten Wandabschnittes 12 erfasst wird. Diese Information kann in der der Pressmaschine 72 dazu herangezogen werden, um beispielsweise den Verfahrweg 75 auf Basis des gemessenen Außendurchmessers 40 zu steuern. Somit kann bei Messung eines größeren Außendurchmessers 40 auch der Verfahrweg 75 des Presswerkzeuges 73 vergrößert werden, sodass der Verpressgrad bei aufgrund der Fertigungstoleranzen geringfügig unterschiedlichen Steckerbaugruppen 1 konstant gehalten werden.

Die Ausführungsbeispiele zeigen mögliche Ausführungsvarianten der Steckerbaugruppe 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus der Steckerbaugruppe 1 diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Steckerbaugruppe | 29 | Dichtungsaufnahme Steckverbinder |
| 2 | Gegensteckverbinder | | |
| 3 | Rohr | 30 | Dritter Mantelabschnitt |
| 4 | Steckverbinder | 31 | Stirnwandung Dichtungsaufnahme |
| 5 | Dichtungselement | 32 | Stirnwandung erster Mantelabschnitt |
| 6 | Verbinderkörper | | |
| 7 | Fahrzeug | 33 | Axiale Erstreckung erster Mantelabschnitt |
| 8 | Turbolader | | |
| 9 | Längsachse des Steckverbinders | 34 | Verbindungsabschnitt |
| 10 | Steckerdichtung | 35 | Abstand |
| 11 | Federelement | 36 | Innenmantelfläche Dichtungselement |
| 12 | erster Mantelabschnitt | | |
| 13 | innenliegende Mantelfläche | 37 | Außenmantelfläche Dichtungselement |
| 14 | außenliegende Mantelfläche | | |
| 15 | zweiter Mantelabschnitt | 38 | Wandstärke Dichtungselement |
| 16 | erster Endabschnitt Steckverbinder | 39 | Innendurchmesser Dichtungselement |
| 17 | S tirnw andab schnitt | | |
| 18 | innenliegende Mantelfläche | 40 | Außendurchmesser erster Mantelabschnitt |
| 19 | außenliegende Mantelfläche | | |
| 20 | Wandstärke erster Mantelabschnitt | 41 | Breite Dichtungselement |
| 21 | Wandstärke zweiter Mantelabschnitt | 42 | Umfangfläche |
| | | 43 | Fixierausnehmung |
| 22 | Ringraum | 44 | Dichtungsaufnahme Rohr |
| 23 | Ringraumspalt | 45 | Innenmantelfläche Dichtungsaufnahme |
| 24 | zweiter Endabschnitt Steckverbinder | | |
| | | 46 | Innendurchmesser Dichtungsaufnahme |
| 25 | Rohraufnahmeseite | | |
| 26 | Abschrägung | 47 | Außendurchmesser Dichtungselement |
| 27 | Einschieberichtung | | |
| 28 | Abschrägung | 48 | Abschrägung |
| 49 | Innenmantelfläche des Rohres | 79 | Oberfläche |
| 50 | Außenmantelfläche des Rohres | | |
| 51 | Axialrichtung | | |
| 52 | Stirnwandung Rohr | | |
| 53 | Abstand Dichtungsaufnahme-Stirnwandung | | |
| 54 | Abstand Fixierausnehmung-Stirnwandung | | |
| 55 | Nut | | |
| 56 | Stufenansatz | | |
| 57 | Zwischensteg | | |
| 58 | Ansatz | | |
| 59 | axiale Position des Rohres | | |
| 60 | Außendurchmesser Rohr | | |
| 61 | Innendurchmesser zweiter Mantelabschnitt | | |
| 62 | zylindrischer Rohrabschnitt | | |
| 63 | erste Umformstelle | | |
| 64 | weite Umformstelle | | |
| 65 | weiteres Bauelement | | |
| 66 | Ausnehmung | | |
| 67 | Positionierlasche | | |
| 68 | Winkellage | | |
| 69 | Fensteröffnung | | |
| 70 | Anzeigepfeil | | |
| 71 | Anzeigenase | | |
| 72 | Pressmaschine | | |
| 73 | Presswerkzeug | | |
| 74 | Radialrichtung | | |
| 75 | Verfahrweg | | |
| 76 | erster Teilbereich | | |
| 77 | zweiter Teilbereich | | |
| 78 | Abstandsmesseinrichtung | | |

## Patentansprüche

1. Steckerbaugruppe (1), insbesondere zur Verwendung in einem Straßenfahrzeug, umfassend ein Rohr (3), ein Dichtungselement (5) und einen Steckverbinder (4), welcher einen Verbinderkörper (6) umfasst, welcher Verbinderkörper (6) einen Ringraum (22) aufweist, der zwischen einem hülsenförmigen, im Querschnitt eine zentrale Längsachse (9) des Steckverbinders (4) ringförmig umgebenden ersten Mantelabschnitt (12) und einem hülsenförmigen, im Querschnitt die zentrale Längsachse (9) ringförmig umgebenden zweiten Mantelabschnitt (15) des Steckverbinders (4) liegt, wobei der erste Mantelabschnitt (12) vom zweiten Mantelabschnitt (15) umgeben ist und der erste Mantelabschnitt (12) des Verbinderkörpers (6) mit dem zweiten Mantelabschnitt (15) an einem ersten Endabschnitt (16) durch einen ersten Stirnwandabschnitt (17) verbunden ist und die Mantelabschnitte (12, 15) an einem zweiten Endabschnitt (24) offen zueinander sind, wodurch eine Rohraufnahmeseite (25) des Verbinderkörpers (6) ausgebildet ist, wobei ein Verbindungsabschnitt (34) des Rohres (3) von der Rohraufnahmeseite (25) her in den Ringraum (22) des Verbinderkörpers (6) eingesetzt und mit diesem verbunden ist, **dadurch gekennzeichnet, dass** der Verbindungsabschnitt (34) des Rohres (3) eine an einer Umfangfläche (42) des Rohres (3) eingebrachte Fixierausnehmung (43) und baulich davon getrennt eine Dichtungsaufnahme (44) aufweist, welche im zusammengebauten Zustand der Steckerbaugruppe (1) mit dem Dichtungselement (5) zusammenwirkt, wobei im zusammengebauten Zustand der Steckerbaugruppe (1) der erste (12) oder der zweite Mantelabschnitt (15) im Bereich der Fixierausnehmung (43) dermaßen verformt ist, sodass eine formschlüssige Verbindung zwischen ersten (12) oder zweiten Mantelabschnitt (15) des Verbinderkörpers (6) und Fixierausnehmung (43) des Rohres (3) hergestellt ist, und dass der erste (12) oder der zweite Mantelabschnitt (15) im Bereich der Dichtungsaufnahme (44) dermaßen verformt ist, sodass das Dichtungselement (5) zwischen ersten (12) oder zweiten Mantelabschnitt (15) und Dichtungsaufnahme (44) gepresst ist.

2. Steckerbaugruppe nach Anspruch 1, **dadurch gekennzeichnet, dass** sowohl die Fixierausnehmung (43) als auch die Dichtungsaufnahme (44) in eine Innenmantelfläche (49) des Rohres (3) eingebracht sind, wobei die Fixierausnehmung (43) und die Dichtungsaufnahme (44) axial zueinander beabstandet sind.

3. Steckerbaugruppe nach Anspruch 1 oder 2, **dadurch gekennzeichnet, dass** der erste Mantelabschnitt (12) des Verbinderkörpers (6) sich im zusammengebauten Zustand der Steckerbaugruppe (1) in Axialrichtung (51) gesehen über die Fixierausnehmung (43) als auch über die Dichtungsaufnahme (44) des Rohres (3) erstreckt, sodass sowohl die Verpressung im Bereich der Fixierausnehmung (43) als auch die Verpressung im Bereich des Dichtungselementes (5) durch eine Verformung des ersten Mantelabschnittes (12) realisiert sind.

4. Steckerbaugruppe nach einem der vorhergehenden Ansprüche, **dadurch gekennzeichnet, dass** die Fixierausnehmung (43) im Rohr (3) als im Querschnitt halbrunde, in die Innenmantelfläche (49) des Rohres (3) eingebrachte Nut (55) ausgebildet ist.

5. Steckerbaugruppe nach einem der vorhergehenden Ansprüche, **dadurch gekennzeichnet, dass** die Dichtungsaufnahme (44) des Rohres (3) als an der Innenmantelfläche (49) eingebrachter Stufenansatz (56) ausgebildet ist, in welchem das Dichtungselement (5) aufgenommen ist.

6. Steckerbaugruppe nach einem der vorhergehenden Ansprüche, **dadurch gekennzeichnet, dass** der Abstand (53) der Dichtungsaufnahme (44) zu einer Stirnwandung (52) des Rohres (3) geringer ist, als der Abstand (54) der Fixierausnehmung (43) zu der Stirnwandung (52).

7. Steckerbaugruppe nach einem der vorhergehenden Ansprüche, **dadurch gekennzeichnet, dass** das Rohr (3) in dessen Verbindungsabschnitt (34) einen Ansatz (58) aufweist, welcher mit einer Stirnwandung (32) des ersten Mantelabschnittes (12) korrespondiert, sodass die axiale Position (59) des Rohres (3) relativ zum Steckverbinder (4) im zusammengebauten Zustand, insbesondere während des Zusammenbaues vorgebbar ist.

8. Steckerbaugruppe nach einem der vorhergehenden Ansprüche, **dadurch gekennzeichnet, dass** das Dichtungselement (5) eine zylindrische Innenmantelfläche (36) und eine zylindrische Außenmantelfläche (37) aufweist, wobei im eingebauten Zustand des Dichtungselementes (5) die zylindrische Innenmantelfläche (36) am ersten Mantelabschnitt (12) des Verbinderkörpers (6) und die zylindrische Außenmantelfläche (37) an der Innenmantelfläche (45) der Dichtungsaufnahme (44) des Rohres (3) anliegt.

9. Steckerbaugruppe nach einem der vorhergehenden Ansprüche, **dadurch gekennzeichnet, dass** das Rohr (3) an seinem Verbindungsabschnitt (34) an der Stirnwandung (52) zumindest eine sich axial erstreckende Ausnehmung (66) aufweist, welche mit einer Positionierlasche (67) im Verbinderkörper (6) korresponidert.

10. Steckerbaugruppe nach einem der vorhergehenden Ansprüche, **dadurch gekennzeichnet, dass** der Verbinderkörper (6) als einteiliges Umformteil, etwa als Tiefziehteil, insbesondere aus einem Edelstahlblech, gebildet ist.

11. Steckerbaugruppe nach einem der vorhergehenden Ansprüche, **dadurch gekennzeichnet, dass** das Rohr (3) aus einem Kunststoff, etwa Polyamid, mittels eines Spritzgussverfahrens hergestellt ist.

12. Fahrzeug (7), insbesondere straßengebundenes Fahrzeug (7), mit einer an der Ansaugseite oder Druckseite eines Turboladers (8) angeordneten Steckerbaugruppe (1), nach einem der vorhergehenden Ansprüche.

13. Verfahren zum Verbinden eines Verbindungsabschnitt (34) eines Rohres (3) für flüssige oder gasförmige Medien mit einem Steckverbinder (4), wobei der Verbindungsabschnitt (34) des Rohres (3) eine an einer Umfangfläche (42) des Rohres (3) eingebrachte Fixierausnehmung (43) und baulich davon getrennt eine Dichtungsaufnahme (44) aufweist, und wobei der Steckverbinder (4) einen Verbinderkörper (6) umfasst, welcher Verbinderkörper (6) einen Ringraum (22) aufweist, der zwischen einem hülsenförmigen, im Querschnitt eine zentrale Längsachse (9) des Steckverbinders (4) ringförmig umgebenden ersten Mantelabschnitt (12) und einem hülsenförmigen, im Querschnitt die zentrale Längsachse (9) ringförmig umgebenden zweiten Mantelabschnitt (15) des Steckverbinders (4) liegt, wobei der erste Mantelabschnitt (12) vom zweiten Mantelabschnitt (15) umgeben ist und der erste Mantelabschnitt (12) des Verbinderkörpers (6) mit dem zweiten Mantelabschnitt (15) an einem ersten Endabschnitt (16) durch einen ersten Stirnwandabschnitt (17) verbunden ist und die Mantelabschnitte (12, 15) an einem zweiten Endabschnitt (24) offen zueinander sind, wodurch eine Rohraufnahmeseite (25) des Verbinderkörpers (6) ausgebildet ist, insbesondere sind der Steckverbinder (4) und das Rohr (3) nach einem der vorhergehenden Ansprüche ausgebildet, wobei
- in einem ersten Verfahrensschritt ein Dichtungselement (5) in den Ringraum (22) des Steckverbinders (4) zwischen ersten (12) und zweiten Mantelabschnitt (15), insbesondere an den ersten Mantelabschnitt (12) anliegend eingebracht wird;
- in einem zweiten Verfahrensschritt der Verbindungsabschnitt (34) des Rohres (3) von der Rohraufnahmeseite (25) des Verbinderkörpers (6) her in den Ringraum (22) des Steckverbinders (4) eingeschoben und positioniert wird;
- in einem dritten Verfahrensschritt ein Presswerkzeug (73) den ersten Mantelabschnitt (12) des Verbinderkörpers (6) verformt, wobei ein erster Teilbereich (76) des Presswerkzeuges (73) den ersten Mantelabschnitt (12) im Bereich der Fixierausnehmung (43) so verformt, dass eine formschlüssige Verbindung zwischen Fixierausnehmung (43) des Rohres (3) und Steckverbinder (4) hergestellt wird, und ein zweiter Teilbereich (77) des Presswerkzeuges (73) einen axial distanzierten Bereich des ersten Mantelabschnittes (12) im Bereich der Dichtungsaufnahme (44) so verformt, dass das Dichtungselement (5) durch den ersten Mantelabschnitt (12) komprimiert und somit zwischen ersten Mantelabschnitt (12) und Dichtungsaufnahme (44) des Rohres (3) geklemmt wird.

14. Verfahren nach Anspruch 13, **dadurch gekennzeichnet, dass** während des Umformverfahrens der Verfahrweg (75) des Presswerkzeuges (73) überwacht wird, wobei vor dem Verformen und/oder beim Verformen des ersten Mantelabschnitts (12) mit mindestens einer Abstandsmesseinrichtung (78) durch eine im zweiten Mantelabschnitt (15) angeordnete Fensteröffnung (69) hindurch die der Fensteröffnung (69) zugewandte Oberfläche (79) des Rohres (3) erfasst wird und die Verformung des ersten Mantelabschnitts (12) in Abhängigkeit vom Ergebnis der mit der Abstandsmesseinrichtung (78) durchgeführten Erfassung der Oberfläche (79) des Rohres (3) durchgeführt wird.

15. Verfahren nach Anspruch 13 oder 14, **dadurch gekennzeichnet, dass** während des Umformverfahrens die vom Presswerkzeug (73) auf den ersten Mantelabschnitt (12) aufgebrachte Kraft gemessen und aktiv vorgegeben wird.

16. Verfahren nach einem der Ansprüche 13 bis 15, **dadurch gekennzeichnet, dass** vor dem zweiten Verfahrensschritt die richtige Positionierung des Dichtungselementes (5) im Steckverbinder (4) durch die Messeinrichtung (78) kontrolliert wird.

## Claims

1. A connector assembly (1), in particular for use in a road vehicle, comprising a pipe (3), a sealing element (5) and a plug connector (4), which comprises a connector body (6), which connector body (6) has an annular chamber (22) which lies between a sleeve-like, first casing section (12) of the plug connector (4) annularly surrounding a central longitudinal axis (9) in cross-section and a sleeve-like second casing section (15) of the plug connector (4) annularly surrounding the central longitudinal axis (9) in cross-section, wherein the first casing section (12) is surrounded by the second casing section (15), and the first casing section (12) of the connector body (6) is connected to the second casing section (15) at a first end section (16) by a first end wall section (17), and the casing sections (12, 15) are open to one another at a second end section (24), whereby a pipe receiving side (25) of the connector body (6) is formed, wherein a connecting section (34) of the pipe (3) is inserted from the pipe receiving side (25) into the annular chamber (22) of the connector body (6) and connected to the latter, **characterized in that** the connecting section (34) of the pipe (3) comprises a fixing recess (43) formed on a circumferential surface (42) of the pipe (3) and a seal retainer (44) which is structurally separate from the latter and which in the assembled state of the connector assembly (1) cooperates with the sealing element (5), wherein in an assembled state of the connector assembly (1) the first (12) or the second casing section (15) is deformed in the region of the fixing recess (43) such that a form-fitting connection is produced between the first (12) or second casing section (15) of the connector body (6) and fixing recess (43) of the pipe (3) and that the first (12) or the second casing section (15) is deformed in the region of the seal retainer (44) such that the sealing element (5) is pressed between the first (12) or second casing section (15) and seal retainer (44).

2. The connector assembly as claimed in claim 1, wherein both the fixing recess (43) and the seal retainer (44) are inserted into an inner casing surface (49) of the pipe (3), wherein the fixing recess (43) and the seal retainer (44) are spaced apart from one another axially.

3. The connector assembly as claimed in claim 1 or 2, **characterized in that** the first casing section (12) of the connector body (6) extends in the assembled state of the connector assembly (1) as viewed in axial direction (51) over the fixing recess (43) and also over the seal retainer (44) of the pipe (3), so that both the pressing in the region of the fixing recess (43) and the pressing in the region of the of the sealing element (5) are implemented by a deformation of the first casing section (12).

4. The connector assembly according to any one of the preceding claims, **characterized in that** the fixing recess (43) is formed in the pipe (3) as a groove (55), which is semi-circular in cross-section, formed in the inner casing surface (49) of the pipe (3).

5. The connector assembly according to any one of the preceding claims, **characterized in that** the seal retainer (44) of the pipe (3) is designed as a stepped edge (56) formed on the inner casing surface (49), in which the sealing element (5) is mounted.

6. The connector assembly according to any one of the preceding claims, **characterized in that** the distance (53) of the seal retainer (44) from an end face wall (52) of the pipe (3) is smaller than the distance (54) of the fixing recess (43) from the end face wall (52).

7. The connector assembly according to any one of the preceding claims, **characterized in that** the pipe (3) has an edge (58) in its connecting section (34) which corresponds with an end face wall (32) of the first casing section (12), so that the axial position (59) of the pipe (3) can be defined relative to the plug connector (4) in the assembled state, in particular during the assembly.

8. The connector assembly according to any one of the preceding claims, **characterized in that** the sealing element (5) has a cylindrical inner casing surface (36) and a cylindrical outer casing surface (37), wherein in the installed state of the sealing element (5) the cylindrical inner casing surface (36) bears on the first casing section (12) of the connector body (6) and the cylindrical outer casing surface (37) bears on the inner casing surface (45) of the seal retainer (44) of the pipe (3).

9. The connector assembly according to any one of the preceding claims, **characterized in that** the pipe (3) has at least one axially extending recess (66) on its connecting section (34) on the end face wall (52), which recess corresponds with a positioning tab (67) in the connector body (6).

10. The connector assembly according to any one of the preceding claims, **characterized in that** the connector body (6) is designed as a one-piece molded part, such as a deep-drawn part, made in particular from stainless steel sheet.

11. The connector assembly according to any one of the preceding claims, **characterized in that** the pipe (3) is made from plastic, such as polyamide, by means of an injection molding method.

12. A vehicle (7), in particular a road-bound vehicle (7), with a connector assembly (1), arranged on the suction side or pressure side of a turbocharger (8), according to any one of the preceding claims.

13. A method for connecting a connecting section (34) of a pipe (3) for liquid or gaseous media with a plug connector (4), wherein the connecting section (34) of the pipe (3) comprises a securing recess (43) formed on a circumferential surface (42) of the pipe (3) and a seal retainer (44) structurally separated from the latter, and wherein the plug connector (4) comprises a connector body (6), which connector body (6) comprises an annular chamber (22), which is between a sleeve-like, first casing section (12) of the plug connector (4) annularly surrounding a central longitudinal axis (9) in cross-section and a sleeve-like second casing section (15) of the plug connector (4) annularly surrounding the central longitudinal axis (9) in cross-section, wherein the first casing section (12) is surrounded by the second casing section (15) and the first casing section (12) of the connector body (6) is connected to the second casing section (15) at a first end section (16) by a first end wall section (17), and the casing sections (12, 15) at a second end section (24) are open to one another, whereby a pipe receiving side (25) of the connector body (6) is formed, in particular the plug connector (4) and the pipe (3) are designed according to any one of the preceding claims, wherein
- in a first method step a sealing element (5) is inserted into the annular chamber (22) of the plug connector (4) between a first (12) and second casing section (15), in particular fitting on the first casing section (12);
- in a second method step the connecting section (34) of the pipe (3) is pushed from the pipe receiving side (25) of the connector body (6) into the annular chamber (22) of the plug connector (4) and positioned;
- in a third method step a pressing tool (73) deforms the first casing section (12) of the connector body (6), wherein a first portion (76) of the pressing tool (73) deforms the first casing section (12) in the region of the fixing recess (43) such that a form-fitting connection is formed between the fixing recess (43) of the pipe (3) and the plug connector (4), and a second portion (77) of the pressing tool (73) deforms an axially spaced apart part of the first casing section (12) in the region of the seal retainer (44) such that the sealing element (5) is compressed by the first casing section (12) and is thus clamped between the first casing section (12) and the seal retainer (44) of the pipe (3).

14. The method as claimed in claim 13, **characterized in that** during the shaping process the movement path (75) of the pressing tool (73) is monitored, wherein prior to the deformation and/or during the deformation of the first casing section (12) by means of at least one distance measuring device (78) the surface (79) of the pipe (3) facing the window opening (69) is detected through a window opening (69) in the second casing section (15) and the first casing section (12) is deformed as a function of the result of the detection of the surface (79) of the pipe (3) performed by the distance measuring device (78).

15. The method as claimed in claim 13 or 14, **characterized in that** during the shaping process the force applied by the pressing tool (73) on the first casing section (12) is measured and actively defined.

16. The method as claimed in any one of claims 13 to 15, **characterized in that** before the second method step the correct positioning of the sealing element (5) in the plug connector (4) is checked by the measuring device (78).

## Revendications

1. Sous-ensemble enfichable (1), plus particulièrement destiné à être utilisé dans un véhicule routier, comprenant un tube (3), un élément d'étanchéité (5) et un connecteur enfichable (4), qui comprend un corps de connecteur (6), lequel corps de connecteur (6) comprenant un espace annulaire (22), qui se trouve entre une première portion d'enveloppe (12) en forme de manchon, entourant de manière annulaire en coupe transversale un axe longitudinal central (9) du connecteur enfichable (4) et une deuxième portion d'enveloppe (15) du connecteur enfichable (4), en forme de manchon, entourant de manière annulaire en coupe transversale l'axe longitudinal central (9), la première portion d'enveloppe (12) étant entourée par la deuxième portion d'enveloppe (15) et la première portion d'enveloppe (12) du corps de connecteur (6) étant reliée avec la deuxième portion d'enveloppe (15) au niveau d'une première portion d'extrémité (16) par une première portion de paroi frontale (17) et les portions d'enveloppe (12, 15) étant ouvertes l'une vers l'autre au niveau d'une deuxième portion d'extrémité (24), ce qui permet de former un côté de logement de tube (25) du corps de connecteur (6), une portion de liaison (34) du tube (3) étant insérée à partir du côté de logement de tube (25) dans l'espace annulaire (22) du corps de connecteur (6) et reliée avec celui-ci, **caractérisé en ce que** la portion de liaison (34) du tube (3) comprend un évidement de fixation (43) réalisé sur une surface circonférentielle (42) du tube (3) et un logement de joint d'étanchéité (44) séparé physiquement de celui-ci, qui interagit, dans l'état assemblé du sous-ensemble enfichable (1), avec l'élément d'étanchéité (5), moyennant quoi, dans l'état assemblé du sous-ensemble enfichable (1), la première (12) ou la deuxième portion d'enveloppe (15) est déformée au niveau de l'évidement de fixation (43) de façon à ce qu'une liaison par complémentarité de forme soit établie entre la première (12) ou la deuxième portion d'enveloppe (15) du corps de connecteur (6) et l'évidement de fixation (43) du tube (3), et à ce que la première (12) ou la deuxième portion d'enveloppe (15) soit déformée au niveau du logement de joint d'étanchéité (44) de façon à ce que l'élément d'étanchéité (5) soit comprimé entre la première (12) ou la deuxième portion d'enveloppe (15) et le logement de joint d'étanchéité (44).

2. Sous-ensemble enfichable selon la revendication 1, **caractérisé en ce que** l'évidement de fixation (43) ainsi que le logement de joint d'étanchéité (44) sont insérés dans une surface d'enveloppe interne (49) du tube (3), l'évidement de fixation (43) et le logement de joint d'étanchéité (44) étant axialement distants entre eux.

3. Sous-ensemble enfichable selon la revendication 1 ou 2, **caractérisé en ce que** la première portion d'enveloppe (12) du corps de connecteur (6) s'étend, dans l'état assemblé du sous-ensemble enfichable (1), vu dans la direction axiale (51), au-dessus de l'évidement de fixation (43) ainsi qu'au-dessus du logement de joint d'étanchéité (44) du tube (3), de façon à ce que la compression au niveau de l'évidement de fixation (43) ainsi que la compression au niveau de l'élément d'étanchéité (5) soient réalisées par une déformation de la première portion d'enveloppe (12).

4. Sous-ensemble enfichable selon l'une des revendications précédentes, **caractérisé en ce que** l'évidement de fixation (43) est réalisé dans le tube (3) sous la forme d'une rainure (55) de section semi-circulaire, réalisée dans la surface d'enveloppe interne (49) du tube (3).

5. Sous-ensemble enfichable selon l'une des revendications précédentes, **caractérisé en ce que** le logement de joint d'étanchéité (44) du tube (3) est conçu comme un épaulement (56) réalisé sur la surface d'enveloppe interne (49), dans lequel l'élément d'étanchéité (5) est logé.

6. Sous-ensemble enfichable selon l'une des revendications précédentes, **caractérisé en ce que** la distance (53) entre le logement du joint d'étanchéité (44) et une paroi frontale (52) du tube (3) est inférieure à la distance (54) entre l'évidement de fixation (43) et la paroi frontale (52).

7. Sous-ensemble enfichable selon l'une des revendications précédentes, **caractérisé en ce que** le tube (3) présente, dans sa portion de liaison (34), un épaulement (58), qui correspond à une paroi frontale (32) de la première portion d'enveloppe (12), de façon à ce que la position axiale (59) du tube (3) par rapport au connecteur enfichable (4), dans l'état assemblé, puisse être prédéterminée, plus particulièrement pendant l'assemblage.

8. Sous-ensemble enfichable selon l'une des revendications précédentes, **caractérisé en ce que** l'élément d'étanchéité (5) comprend une surface d'enveloppe interne cylindrique (36) et une surface d'enveloppe externe cylindrique (37), moyennant quoi, lorsque l'élément d'étanchéité (5) est monté, la surface d'enveloppe interne cylindrique (36) s'appuie contre la première portion d'enveloppe (12) du corps de connecteur (6) et la surface d'enveloppe externe cylindrique (37) s'appuie contre la surface d'enveloppe interne (45) du logement de joint d'étanchéité (44) du tube (3).

9. Sous-ensemble enfichable selon l'une des revendications précédentes, **caractérisé en ce que** le tube (3) comprend, au niveau de sa portion de liaison (34), sur la paroi frontale (52), au moins un évidement à extension axiale (66), qui correspond à un axe de positionnement (67) dans le corps de connecteur (6).

10. Sous-ensemble enfichable selon l'une des revendications précédentes, **caractérisé en ce que** le corps de connecteur (6) est conçu comme une pièce formée, par exemple comme une pièce emboutie, plus particulièrement en tôle d'acier inoxydable.

11. Sous-ensemble enfichable selon l'une des revendications précédentes, **caractérisé en ce que** le tube (3) est fabriqué à partir d'une matière plastique, par exemple du polyamide, au moyen d'un procédé de moulage par injection.

12. Véhicule (7), plus particulièrement véhicule routier (7), avec un sous-ensemble enfichable (1), disposé sur le côté d'aspiration ou le côté de pression d'un turbocompresseur (8), selon l'une des revendications précédentes.

13. Procédé de liaison d'une portion de liaison (34) d'un tube (3) pour des fluides liquides ou gazeux avec un connecteur enfichable (4), la portion de liaison (34) du tube (3) comprenant un évidement de fixation (43) réalisé sur une surface circonférentielle (42) du tube (3) et un logement de joint d'étanchéité (44) séparé physiquement de celui-ci et le connecteur enfichable (4) comprenant un corps de connecteur (6), lequel corps de connecteur (6) comprenant un espace annulaire (22) qui se trouve entre une première portion d'enveloppe (12) en forme de manchon, entourant de manière annulaire en coupe transversale un axe longitudinal central (9) du connecteur enfichable (4) et une deuxième portion d'enveloppe (15) du connecteur enfichable (4), en forme de manchon, entourant de manière annulaire en coupe transversale l'axe longitudinal central (9), la première portion d'enveloppe (12) étant entourée par la deuxième portion d'enveloppe (15) et la première portion d'enveloppe (12) du corps de connecteur (6) étant reliée avec la deuxième portion d'enveloppe (15) au niveau d'une première portion d'extrémité (16) par une première portion de paroi frontale (17) et les portions d'enveloppe (12, 15) étant ouvertes l'une vers l'autre au niveau d'une deuxième portion d'extrémité (24), ce qui permet de former un côté de logement de tube (25) du corps de connecteur (6), plus particulièrement le connecteur enfichable (4) et le tube (3) étant conçus selon l'une des revendications précédentes,
- dans une première étape, un élément d'étanchéité (5) étant inséré dans l'espace annulaire (22) du connecteur enfichable (4) entre la première (12) et la deuxième portion d'enveloppe (15), plus particulièrement en appui contre la première portion d'enveloppe (12) ;
- dans une deuxième étape, la portion de liaison (34) du tube (3) est insérée et positionnée à partir du côté de logement du tube (25) du corps de connecteur (6) dans l'espace annulaire (22) du connecteur enfichable (4) ;
- dans une troisième étape, un outil de presse (73) déforme la première portion d'enveloppe (12) du corps de connecteur (6), une première partie (76) de l'outil de presse (73) déformant la première portion d'enveloppe (12) au niveau de l'évidement de fixation (43) de façon à établir une liaison par complémentarité de forme entre l'évidement de fixation (43) du tube (3) et le connecteur enfichable (4), et une deuxième partie (77) de l'outil de presse (73) déformant une zone distante axialement de la première portion d'enveloppe (12) au niveau du logement de joint d'étanchéité (44), de façon à ce que l'élément d'étanchéité (5) soit comprimé par la première portion d'enveloppe (12) et soit donc coincé entre la première portion d'enveloppe (12) et le logement de joint d'étanchéité (44) du tube (3).

14. Procédé selon la revendication 13, **caractérisé en ce que**, pendant le processus de formage, le trajet de déplacement (75) de l'outil de presse (73) est surveillé, moyennant quoi, avant la déformation et/ou lors de la déformation de la première portion d'enveloppe (12), la surface (79), orientée vers l'ouverture de fenêtre (69), du tube (3) est mesurée avec au moins un dispositif de mesure de distance (78), à travers une ouverture de fenêtre (69) disposée dans la deuxième portion d'enveloppe (15) et la déformation de la première portion d'enveloppe (12) est effectuée en fonction du résultat de la mesure, effectuée avec le dispositif de mesure de distance (78), de la surface (79) du tube (3).

15. Procédé selon la revendication 13 ou 14, **caractérisé en ce que**, pendant le processus de formage, la force exercée par l'outil de presse (73) sur la première portion d'enveloppe (12) est mesurée et prédéterminée de manière active.

16. Procédé selon l'une des revendications 13 à 15, **caractérisé en ce que**, avant la deuxième étape, le positionnement correct de l'élément d'étanchéité (5) dans le connecteur enfichable (4) est contrôlé par le dispositif de mesure (78).
